# EUROPEAN PATENT SPECIFICATION

(11) **EP 2 245 882 B1**
(45) Date of publication and mention of the grant of the patent: **26.09.2012**
(21) Application number: 08867126.8
(22) Date of filing: 22.12.2008
(51) Int. Cl.: H04W 36/38, H04W 88/18, H04W 84/04

(54) **AUTO CONFIGURATION OF MOBILITY ENTITY**
SELBSTKONFIGURATION EINER MOBILITÄTSENTITÄT
CONFIGURATION AUTOMATIQUE D'ENTITÉ DE MOBILITÉ

(30) Priority: 27.12.2007 US 16857
(43) Date of publication of application: 03.11.2010
(73) Proprietor: Telefonaktiebolaget LM Ericsson (publ), 164 83 Stockholm (SE)
(72) Inventor: OLSSON, Lars-Bertil, S-424 48 Angered (SE)
(74) Representative: Althoff, Fredrik
(86) International application number: PCT/EP2008/068153
(87) International publication number: WO 2009/083529

(56) References cited:
- RAN3: "Reply on LS on Area and Access Restrictions" 3GPP DRAFT; R3-072395, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_ran\WG3_Iu\TSGR3_58\docs, no. Jeju Island; 20071105, 10 November 2007 (2007-11-10), XP050163170
- CT1: "LS on Area and Access Restrictions" 3GPP DRAFT; S2-074942_C1-072484-LS-OUT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_sa\WG2_Arch\TSGS2_61_Ljubljana\Docs, no. Ljubljana; 20071112, 25 October 2007 (2007-10-25), XP050261688

## Description

### TECHNICAL FIELD

The present invention relates to a solution for handling geographical issues in a telecommunications network related to user restriction list.

### BACKGROUND OF THE INVENTION

As part of the new 3GPP architecture of the Radio Access Network (RAN), the Evolved Universal Terrestrial Radio Access Network (E-UTRAN) access is provided by Radio Base Stations (RBS, in E-UTRAN a.k.a. eNodeB).

The eNodeB communicates with the core network (CN) functions Mobility Management Entity (MME) using the S1-MME reference point, and with the Serving Gateway (S-GW) using the S1-U reference point. The MME provides the CN mobility management of E-UTRAN access and the S-GW provides the IP connectivity of E-UTRAN access.

Mobility management and IP connectivity is moved between E-UTRAN nodes and CN nodes by handover procedures when the UE is handled in EPS Connection Management (ECM) state ECM-CONNECTED.

### X2 based handover

One of the handover procedures relies on that the X2 reference point between eNodeBs is deployed. This procedure allows the eNodeBs to decide on mobility management for a UE without an interactive participation of nodes in the CN. The information used by an eNodeB to decide about a UE handover is for this procedure partly relying on information provided by the CN in advance of starting the procedure.

To assist the eNodeB at deciding about UE handover, the MME provides the eNodeB with a Handover Restriction List (HRL) per UE. The eNodeB may, based on information in the Handover Restriction List, refrain from starting an X2-based handover.

When the UE is moved to a Tracking Area (TA) that is not part of the Tracking Area Identity List (TAI List) stored by the MME, the UE performs the Tracking Area Update (TAU) procedure. As part of the TAU procedure the MME may provide the eNodeB with an updated Handover Restriction List for the UE.

The 3GPP documents R3-072395 "Reply on LS on Area and Access Restrictions" and R2-052910 "Roaming/Area Restrictions for LTE" describe the information provided in the Handover Restriction List.

One activity related to making the E-UTRAN operative is to start the eNodeBs and part of that is to establish signalling connections at the reference point between eNodeB and MME, the S1-MME. Start of the application protocol S1-AP (S1-AP specification in 3GPP TS 36.413) at S1-MME involves exchange of information regarding node capabilities and other information. The information provided may be related to served cell IDs, served tracking areas, supported ciphering algorithms, served GUMMEIs, etc.
Both the eNodeBs and the MMEs may later update exchanged parameters.

However, the information that can be exchanged when establishing an S1-AP association at start of eNodeB is limited to the information available at that time. Information gathered by E-UTRAN by Automatic Neighbor Relation function (ANR) discovery, for example cells and tracking areas that are geographically adjacent to the cells and tracking areas served by the eNodeB, is not available at start of node operation.

To assist the eNodeB at selecting a suitable handover target eNodeB at X2-based handover, the MME may provide the eNodeB with a Handover Restriction List that either
a) cover the entire area of X2-based handover, or,
b) cover the area that is geographically adjacent to the area defined by the Tracking Area List (TAI List).

Using option a) will relieve the MME from the need to update the Handover Restriction List in eNodeB with new restriction information as long as the UE stays mobility handled within the area handled by the MME.
However, the Handover Restriction List would need to include all restrictions for the entire X2-based handover area and that may be extensive and may also cause an extra load on signaling and memory usage in eNodeB.

It will potentially also cause a peak in S1-AP signaling. This event may occur at a change in general restriction conditions as such change requires all instances of Handover Restriction Lists in all eNodeBs of the coverage area to be updated.

For option b) the Handover Restriction List is populated with information that is selected based on that the MME in some way has gained knowledge of geographical relationship between Tracking Areas (TAs).

The MME could gain the knowledge of geographical relationship in different ways, for example by node configuration, by receiving information from OSS (Operations Support Systems), by learning TA relationship from UE interactions or by information directly provided by E-UTRAN.

The currently available ways in 3GPP standard for the MME to gain the knowledge about geographical relationship between TAs is by some sort of configuration.
This, however, is not in line with current standardization efforts in RAN where the LTE E-UTRAN will use an automatic neighbor relation (ANR) function to find out the geographically adjacent areas.

Option a) has been ruled out as the size of resources in eNodeB cannot be estimated. For option b) the problem is twofold;
- Firstly it requires extensive configuration of TAs in MME. Each TA need to be configured with information about its geographical neighbors.
- Secondly the information will be configured in MME while the same information is auto-configured by E-UTRAN.

### SUMMARY OF THE INVENTION

### Auto-configuration of MME

Extend the S1-AP protocol to include signaling where the eNodeB's reports all identified geographical relationship between TAs, to the MME.

When the MME is required to populate a Restriction List it will use the acquired information to only consider TAs that are adjacent to the TAs of the TAI List.

The eNodeB will by the ANR functionality gradually discover adjacent areas. As soon as the eNodeB by this functionality has identified a new area relationship that the node will use for its own procedures, then the eNodeB sends an S1-AP message to the MME with the information. This will be a new message not yet part of the S1-AP specification in 3GPP TS 36.413. The new information message may be referred to as S1-AP Area Relation Information.

When the MME receives an S1 Area Relation Information message the node saves the area relationship for later use. MME may keep the information until the eNodeB is restarted or by an explicit purge message. This will be a new message not yet part of the S1-AP specification in 3GPP TS 36.413. The purge message may be referred to as S1-AP Area Relation Purge. MME use the area relation information to identify the tracking areas geographically adjacent to the tracking areas of the TAI List for a UE.

When adjacent tracking areas are known by MME, the MME continues to investigate if the UE is access restricted to any of the adjacent areas. If that is the case then the MME provides the eNodeB with the Handover Restriction List populated with the identities of the restricted areas.

To recover from a situation where the MME has dropped or lost area relation information while the eNodeBs have stayed operational, the MME must be able to request an update. For this purpose the MME will use a new S1-AP message which may be referred to as S1-AP Area Relation Information Request.

The S1-AP Area Relation Information Request message allows the MME to recover from a situation where the node has lost area relation information. The message also allows the MME to throttle the inflow of area relation information after a node restart and by that lower the risk of overload at that situation.

It is an object of the present invention to provide a MME and a method, that may provide a restriction list to appropriate entities in the communications network, this is provided in a number of aspects of the present invention, in which a first is a MME providing a handover restriction list in a telecommunications network, comprising:
- a processor;
- a memory;
- and a communication interface.
The processor is arranged to receive on the communication interface an area relation information message, from at least one network access node with a radio interface, providing information about adjacent tracking area relations, store the information in the memory, use the stored tracking area relation information to identify tracking areas geographically adjacent to tracking areas in a tracking area identifier list of a UE, investigate if the UE is access restricted to any of the adjacent tracking areas and populate a handover restriction list with the identities of the restricted tracking areas, and send the handover restriction list in an information element to relevant network access node as a response to a user equipment event.

The handover restriction list may be sent as part of a mobility management control message. The handover restriction may be sent as part of UE-related control signalling from a mobile management entity to an eNodeB.

The area related information may be received from network access nodes using an S1 Application Protocol message.

The MME may further be arranged to transmit the handover restriction list to a network access node not providing area related information.

A second aspect of the present invention is provided, a method for providing a handover restriction list in a telecommunications network, as set out in dependent claim 6.

The method may further comprise a step of purging information in the MME of area relation for a specific eNodeB when the specific eNodeB restarts or sends a purge message.

The present invention has some advantages as compared to the known solution:
- Extensive configuration of mobility management entities, MME, is not needed.
- Reuse of information that is available in E-UTRAN.
- Less risk of mismatch in information between E-UTRAN and CN.

These and other aspects of the invention will be apparent from and elucidated with reference to the embodiments described hereinafter.

### BRIEF DESCRIPTION OF THE DRAWINGS

In the following the invention will be described in a non-limiting way and in more detail with reference to exemplary embodiments illustrated in the enclosed drawings, in which:
Fig. 1 illustrates schematically an embodiment of a network system according to the present invention;
Fig. 2A and B illustrates schematically nodes according to the present invention;
Fig. 3 illustrates schematically in a block diagram a method according to the present invention;

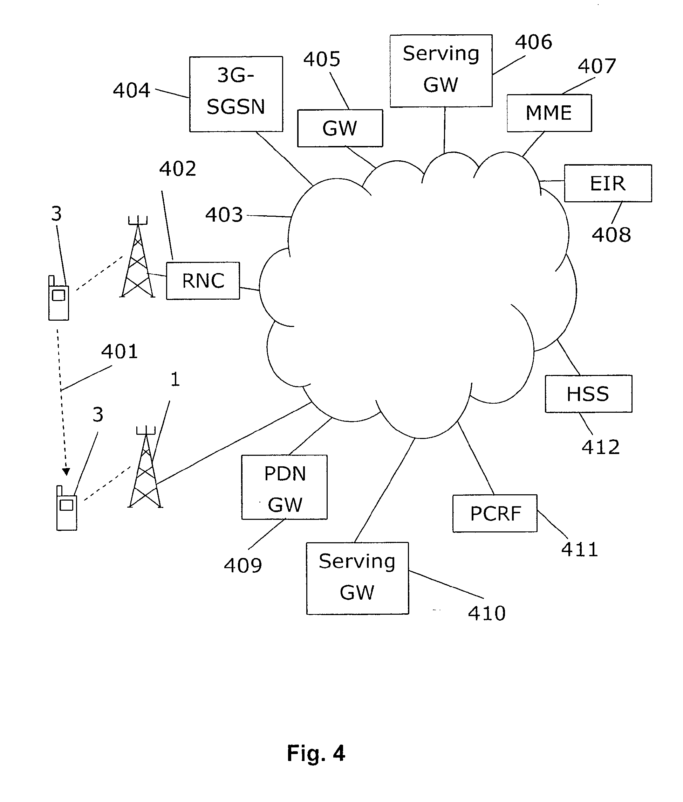

Fig. 4 illustrates schematically a network according to the present invention;
Fig. 5 illustrates schematically in a flow diagram steps during E-UTRAN initial attach according to the present invention; and
Fig. 6 illustrates schematically in a flow diagram steps during E-UTRAN tracking area update according to the present invention.

### DETAILED DESCRIPTION OF PREFERRED EMBODIMENTS

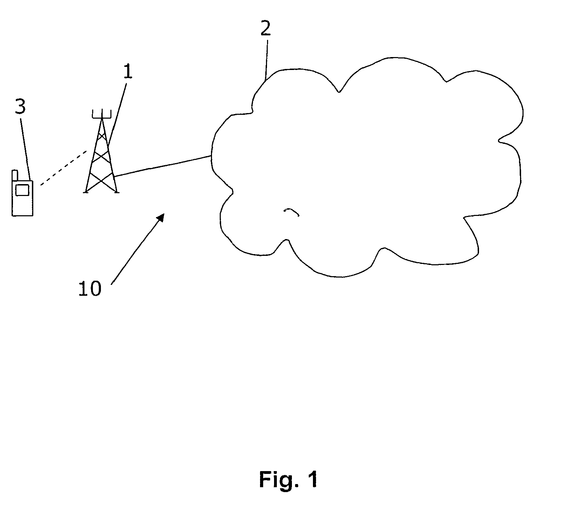

In Fig. 1 reference numeral 10 generally indicate a network according to the present invention, comprising at least one base station 1 or similar wireless network access node (e.g. access point or eNodeB) to an infrastructure communication network 2. The base station 1 is arranged to communicate with user equipment 3 (UE) wirelessly. The base station 1 may comprise one antenna or a plurality of antennas. The core infrastructure communication network 2 comprises several different entities depending on communication protocol used which will be discussed in more detail later in this document.

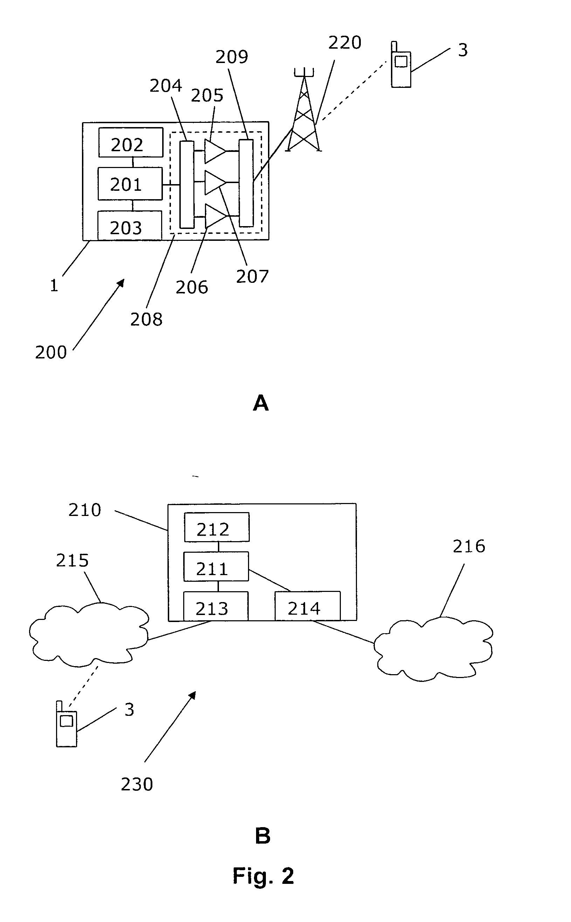

In Fig. 2A a network access node 1 implementing the solution according to the present invention is shown. The access node may comprise at least one processing unit 201, at least one memory unit 202, and at least one communication interface 203. Furthermore, the access node comprises a transceiver portion 208 for receiving and transmitting radio signals through an antenna 220. The transceiver portion may comprise AD/DA unit(s) 204, at least one power amplifier 205, 206, 207, and optionally a switch/multiplexer 209. The processing unit is arranged to run code for communication control and data traffic. It is further arranged to determine which antennas to use in a MIMO communication configuration. The processing unit 201 may comprise for instance a microprocessor, a Digital Signal Processor (DSP), an ASIC (application Specific Integrated Circuit), or an FPGA (Field programmable gate array) or a combination of these. The memory unit 202 may comprise any suitable type of memory (volatile and/or non-volatile) such as e.g. RAM, ROM, EEPROM, Flash, and hard disk. The communication interface 203 connects the access node 1 to the infrastructure network 2. Other communication equipment may be present as well depending on the type of wireless communication protocol/standard used. However, the access node device may comprise any other node part of the radio access network where it is suitable to implement the solution according to the present invention, e.g. RNC (Radio Network Controller), BTS (Base Transceiver Station), BSC (Base Station Controller), or eNodeB.

It should be noted that the transceiver portion 208 may be configured in different ways depending on radio technology and/or communication protocol used.

Fig. 2B shows a second embodiment of a network 230 according to the present invention comprising an infrastructure node 210 part of a core infrastructure network implementing the solution according to the present invention. The infrastructure node 230 may comprise a processing unit 211 controlling communication data (control and/or user plane communication data). The infrastructure node 230 further comprises at least one memory unit (volatile and/or non-volatile) 212 and at least one communication interface 213, 214. For example, the communication interface may comprise one access interface 213 to an access network 215 (i.e. downstream towards the UE 3) and one infrastructure network interface 214 (i.e. upstream away from the UE) towards an infrastructure network 216 (e.g. the Internet or other communication networks). It should be noted that the access network interface and infrastructure network interface may be using the same physical communication interface (e.g. Ethernet, ATM, or similar communication interface). The infrastructure node may comprise an MME, SGSN, or a separate entity located in the core network.

In the present invention an S1-Application Protocol (S1-AP) is extended to include signaling where the eNodeBs reports all identified geographical relationship between TAs (Tracking Area) to the MME (Mobility Management Entity).

When the MME is required to populate a Restriction List it will use the acquired information to add only TAs that are adjacent to the TAs of the TAI List.

The eNodeB will by the ANR (Automatic Neighbor Relation) functionality gradually discover adjacent areas. As soon as the eNodeB by this functionality has identified a new area relationship that the node will use for its own procedures, then the eNodeB sends an S1-AP message to the MME with the information. This message may be called an S1-AP Area Relation Information message.

When the MME receives an S1-AP Area Relation Information message the MME saves the area relationship. MME keeps the information until the eNodeB is restarted or by an explicit purge message. The purge message may be called an S1-AP Area Relation Purge message.

MME use the area relation information to identify the tracking areas geographically adjacent to the tracking areas of the TAI List for a UE.

When they are identified the MME continues to investigate if the UE is access restricted to any of identified areas. If that is the case then the MME provides the eNodeB with the IE (Information Element) Handover Restriction List populated with the identities of the restricted areas.

To recover from an error situation where the MME has lost the received information while the eNodeBs have stayed operational, the MME must be able to request an update. For this purpose the MME sends an S1-AP message requesting an update; this may be called an S1-AP Area Relation Information Request message.

The message allows the MME to recover from a situation where it has lost the area relation information. The message also allows the MME to throttle the inflow of area relation information after a restart of the MME and by that lower the risk of overload at that situation.

The IE Handover Restriction List is provided by MME to eNodeB when the handling of the UE is moved to state ECM-CONNECTED, i.e. when the eNodeB is provided with a UE context.
In addition, an updated Handover Restriction List is conditionally provided by MME to eNodeB when the UE reports that it has moved to a TA "outside" the TAI List, i.e. to a TA not included in TAI List.

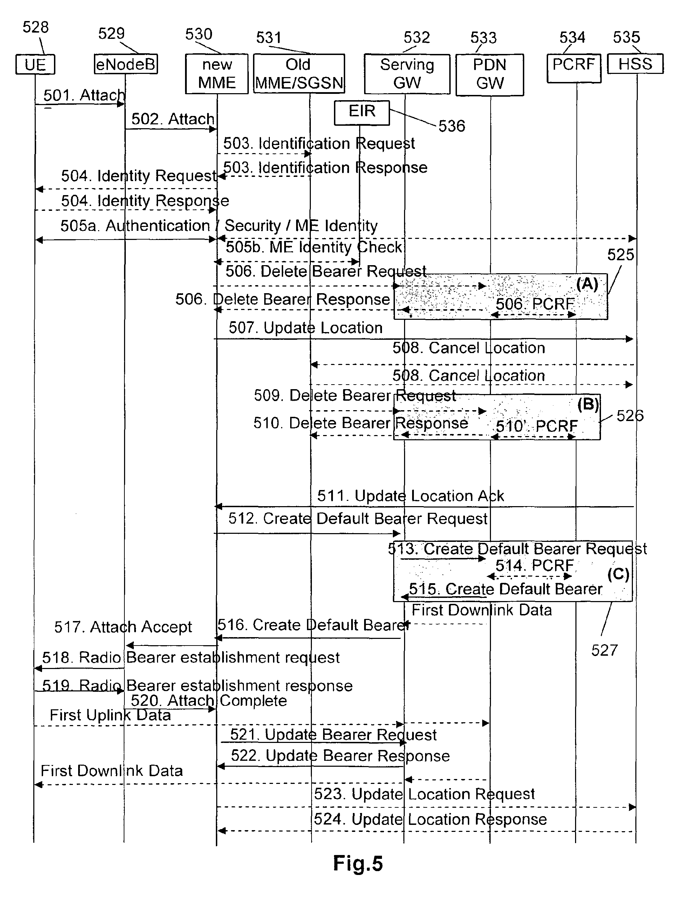

Fig. 5 illustrates an E-UTRAN initial access procedure in a sequence diagram where a Handover Restriction List according to the present invention is provided. A UE 528 request to register with the network to receive services. This registration is known as Network Attachment 501. During the Initial Attach procedure a Mobile Equipment (ME) Identity may be obtained from the UE 505a. A new MME operator may check the ME Identity with an EIR 505b. At least in roaming situations, the new MME should pass the ME Identity to the HSS 505a, and, if a PDN-GW outside of the VPLMN, should pass the ME Identity to the PDN-GW. The nodes involved in this scenario are as follows: a UE 528, an eNodeB 529, an old MME/SGSN 531, a new MME 530, an EIR 536, a Serving Gateway 532, a PDN_GW 533, a PCRF 534, and an HSS 535. An exemplary signaling procedure may be described as follows:
501. The UE request to attach to a network via an eNodeB.
502. The eNodeB send an attach message to the new MME.
503. Optionally, the new MME interchanges identification messages with an old MME/SGSN.
504. The new MME may optionally perform an identity communication with the UE.
505a. Authentication/Security and ME identity communication is performed between the UE and the MME (and possibly with the HSS).
505b. ME identity check may be performed between the MME and the EIR.
506 (block 525). If there are active bearer contexts in the MME, the MME deletes these bearer contexts by sending Delete Bearer Request messages to the GW involved. The GWs acknowledge with Delete Bearer Response message. If a PCRF is deployed, the PDN GW indicates that resources have been released.
507. If the location has changed the MME sends an Update Location message to the HSS.
508. In response the HSS communicates Cancel Location messages with the old MME.
509-510 (block 526). If the old MME has active bearer contexts these are deleted in a similar manner as for in step 506.
511. The HSS transmit an Update Location Acknowledgement message including subscriber data to the new MME.
512. The new MME sends a Create Default Bearer request message to the serving GW.
513-515 (block 527). The serving GW and PDN GW performs suitable create bearer procedures and PCRF procedures.
516. The Serving GW returns a Create Default Bearer Response message to the new MME.
517. The new MME sends an Attach Accept message to the eNodeB. This message is contained in a control message S1-AP Initial Context Setup Request. This S1-AP control message also includes the Handover Restriction List.
518. The eNodeB sends an RRC Connection Reconfiguration message to the UE,
519. which responds with an RRC Connection Reconfiguration Complete message.
520. The UE sends an Attach Complete message which the eNodeB forwards to the new MME and the UE is then attached to the network.
521. The new MME sends an Update Bearer Request message to the Serving GW.
522. The Serving GW acknowledges by sending Update Bearer Response message to the new MME. The Serving GW can then send optionally buffered downlink packets.
523. The new MME may send a Notify Request to the HSS for mobility with non-3GPP accesses.
524. The HSS sends a Notify Response to the new MME.

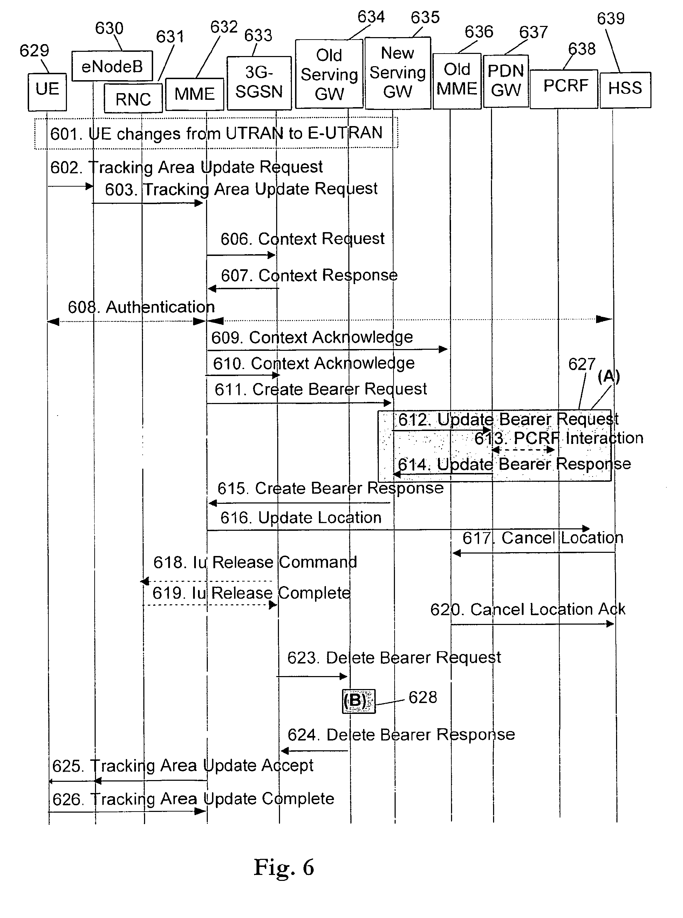

Fig. 6 illustrates in a sequence diagram an E-UTRAN Tracking area update procedure according to the present invention. In this example the following entities are represented: UE 629, eNodeB 630, RNC, 631, MME 632, SGSN (3G) 633, Old serving GW 634, new serving GW 635, Old MME 636, PDN GW 637, PCRF 638, and HSS 639. The signalling may be exemplified as follows:
601. UE changes from UTRAN to E-UTRAN.
602. The UE sends a Tracking Area Update Request to the eNodeB.
603. The eNodeB sends a Tracking Area Update Request to the MME
606. The MME sends a Context Request to the SGSN,
607. The SGSN responds with a Context Response.
608. Authentication signalling is performed between the UE and the MME, and optionally with the HSS.
609-610. The MME sends Context Acknowledge messages to the SGSN and optionally to the old MME.
611. Optionally, the MME sends a Create Bearer Request to a new serving GW.
612-614 (block 627). The new serving GW handles the Update Bearer Request together with the PDN GW and possibly with the PCRF.
615. The new serving GW sends a Create Context Response to the MME.
616. The MME sends an Update Location message to the HSS.
617. The HSS sends a Cancel Location to the old SGSN.
618-619. lu Release command messages are optionally interchanged between the SGSN and RNC.
620. The old SGSN sends a Cancel Location Ack message to the HSS.
623. The SGSN sends a Delete Bearer Request message to the old Serving GW which handles 628 the request, and
624. sends a Delete Bearer Response message to the SGSN.
625. The MME sends an S1-AP Downlink NAS Transport message to convey a Tracking Area Update Accept message. The eNodeB forwards the Tracking Area Update Accept message to the UE. An IE Handover Restriction List may be included in the S1-AP Downlink NAS Transport message sent to the eNodeB since the eNodeB handles the roaming restrictions and access restrictions in this case.
626. The UE responds with a Tracking Area Update Complete message.

The examples given in Figs 5 and 6 are only exemplary and other ways of performing the specific functions shown in Figs 5 and 6 may well be used depending on relevant communication protocol and any evolvement of versions of the protocols involved. The steps described in relation to Figs 5 and 6 are not all compulsory but may be seen as optional depending on situation and configuration of network and UE attachment to the network. The present invention involves the communication of the Handover restriction list (HLR) and Tracking area information list (TAI) to respective node in the communications network. These information elements (IE) may be included in different types of messages depending on functionality performed and entity used in response to a UE event, for instance:
For attach:
   From UE to MME: NAS Attach Request
   From MME to eNodeB to UE: S1-AP Initial Context Setup Request / NAS Attach Accept
For TAU:
   From UE to MME: NAS TAU Request
   From MME to eNodeB to UE: S1-AP Downlink NAS Transport / NAS TAU Accept
For handover procedures:
   Handover is initiated, target MME chooses a target eNodeB
   From MME to target eNodeB: S1-AP Handover Request
For Service Request:
   From UE to MME: NAS Service Request
   From MME to eNodeB: S1-AP Initial Context Setup Request

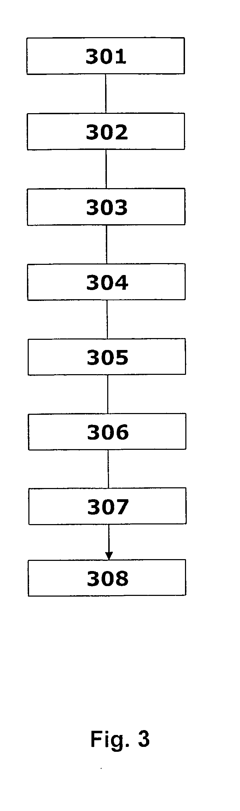

One embodiment for providing restriction list to eNodeB according to the present invention may be shown in relation to Fig. 3:

| | |
|---|---|
| 301. | Sending from at least one eNodeB communicating with an MME, a message informing the MME about area relations for the at least one eNodeB; |
| 302. | Collecting in the MME a plurality of area relation information messages from a plurality of eNodeBs; |
| 303. | Storing collected area relation information in the MME; |
| 304. | Purging information in the MME of area relation for a specific eNodeB when the specific eNodeB restarts or sends a purge message; |
| 305. | Controlling in the MME a restriction list of the UE with the available areas for each eNodeB; |
| 306. | Providing a restriction list from the MME to relevant eNodeBs if relevant events of the UE is detected; |
| 307. | Optionally providing an updated restriction list from the MME to relevant eNodeBs if the UE moves to an area not within collected areas (from step 302). |

It should be noted that even though the present invention has been exemplified using eNodeB and MME, other entities with similar operational features may be used within the scope of the invention.

The present invention may be realized as processor readable instructions stored in a processor readable storage medium and/or as hardware instructions for instance in relation to an ASIC (Application Specific Integrated Circuit) or FPGA (Field Programmable Gate Array).

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

The above mentioned and described embodiments are only given as examples and should not be limiting to the present invention. Other solutions, uses, objectives, and functions within the scope of the invention as claimed in the below described patent claims should be apparent for the person skilled in the art.

### DEFINITIONS AND ABBREVIATIONS

- BSC: Base Station Controller
- BTF: Bearer Translation Function
- BTS: Base Transceiver Station
- DB: Database
- EPC: Evolved Packet Core
- EPS: Evolved Packet System
- E-UTRAN: Evolved UTRAN
- FA: Foreign Agent
- GGSN: Gateway GPRS Support Node
- GPRS: General Packet Radio Service
- GW: Gateway
- HA: Home Agent
- HLR: Home Location Register
- IEEE: Institute of Electrical and Electronics Engineers
- LTE: Long term Evolution
- MME: Mobility Management Entity
- MS: Mobile Station
- NAS: Non-Access Stratum
- PDN: Packet Data Network
- PDP: Packet Data Protocol
- QoS: Quality of service
- RAN: Radio Access Network
- RAU: Radio Area Update
- RNC: Radio Network Controller
- SGSN: Serving GPRS Support Node
- TA: Tracking Area
- TAI: Tracking Area Identity
- TAU: Tracking Area Update
- UE: User Equipment (Mobile Station)
- UTRAN: UMTS Terrestrial Radio Access Network
- VLR: Visitor Location Register
- WAN: Wide Area Network
- WLAN: Wireless Local Area Network
- WPAN: Wireless Personal Area Network

## Claims

1. A mobile management entity, referred to as MME, (210) providing a handover restriction list in a telecommunications network (2, 215, 403), comprising:
- a processor(211);
- a memory (222);
- and a communication interface (213),
wherein the processor is arranged to
- receive on the communication interface an area relation information message, from at least one network access node, eNodeB, (1, 402) with a radio interface, providing information about adjacent tracking area, TA, relations for the at least one eNodeB (1),
- collect a plurality of area relation information messages from a plurality of eNodeBs (1);
- store the collected tracking area relation information in the memory,
- use the stored tracking area relation information to identify tracking areas geographically adjacent to tracking areas in a tracking area identifier list for a UE,
- investigate if the UE is access restricted to any of the adjacent tracking areas and populate a handover restriction list with the identities of the restricted tracking areas,
- send the handover restriction list in an information element to relevant network access node as a response to a user equipment event.

2. The MME according to claim 1, wherein the handover restriction list is sent as part of a mobility management control message.

3. The MME according to claim 1, wherein the handover restriction list is sent as part of UE-related control signalling from the mobility management entity to an eNodeB.

4. The MME according to claim 1, wherein the tracking area relation information is received from network access nodes using an S1 Application Protocol message.

5. The MME according to claim 1, further arranged to transmit the handover restriction list to a network access node not providing area relation information.

6. A method in a mobility management entity (MME) (407) for providing a handover restriction list in a telecommunications network, comprising the steps of:
- receiving from at least one eNodeB an area relation information message informing the MME about adjacent tracking area, TA, relations for the at least one eNodeB;
- collecting a plurality of area relation information messages from a plurality of eNodeBs (1);
- storing collected tracking area relation information;
- using the stored tracking area relation information to identify tracking areas geographically adjacent to tracking areas in a tracking area identifier list for a UE,
- investigating if the UE is access restricted to any of the adjacent tracking areas and populate a handover restriction list with the identities of the restricted tracking areas,
- providing the handover restriction list in an information element from the MME to relevant eNodeBs if relevant events of the UE (3) are detected.

7. The method according to claim 6, further comprising a step of purging information in the MME of tracking area relation for a specific eNodeB when the specific eNodeB restarts or sends a purge message.

## Patentansprüche

1. Mobile Management Entity, MME genannt, (210) zum Bereitstellen einer Handover-Beschränkungsliste in einem Telekommunikationsnetz (2, 215, 403), die Folgendes umfasst:
- einen Prozessor (211);
- einen Speicher (222);
- und eine Kommunikationsschnittstelle (213),
wobei der Prozessor die folgenden Aufgaben hat:
- Empfangen einer Area-Beziehungsinformationsnachricht auf der Kommunikationsschnittstelle von wenigstens einem Netzwerkzugangsknoten, eNodeB, (1, 402) mit einer Funkschnittstelle, die Informationen über benachbarte TA-(Tracking Area)-Beziehungen für den wenigstens einen eNodeB (1) bereitstellt,
- Sammeln von mehreren Area-Beziehungsinformationsnachrichten von mehreren eNodeBs (1);
- Speichern der gesammelten Tracking-Area-Beziehungsinformationen in dem Speicher,
- Verwenden der gespeicherten Tracking-Area-Beziehungsinformationen zum Identifizieren von Tracking Areas, die sich geografisch neben Tracking Areas in einer Tracking-Area-Kennliste für ein UE befinden,
- Untersuchen, ob das UE zu irgendwelchen benachbarten Tracking Areas zugangsbeschränkt ist, und Ausfüllen einer Handover-Beschränkungsliste mit den Identitäten der beschränkten Tracking Areas,
- Senden der Handover-Beschränkungsliste in einem Informationselement zu einem relevanten Netzwerkzugangsknoten als Reaktion auf ein Benutzergeräteereignis.

2. MME nach Anspruch 1, wobei die Handover-Beschränkungsliste als Teil einer Mobility-Management-Steuernachricht gesendet wird.

3. MME nach Anspruch 1, wobei die Handover-Beschränkungsliste als Teil einer UE-bezogenen Steuersignalisierung von der Mobility Management Entity zu einem eNodeB gesendet wird.

4. MME nach Anspruch 1, wobei die Tracking-Area-Beziehungsinformationen von Netzwerkzugangsknoten mit Hilfe einer S1 Anwendungsprotokollnachricht empfangen werden.

5. MME nach Anspruch 1, die ferner so ausgelegt ist, dass sie die Handover-Beschränkungsliste zu einem Netzwerkzugangsknoten sendet, ohne Area-Beziehungsinformationen zu geben.

6. Verfahren in einer Mobility Management Entity (MME) (407) zum Bereitstellen einer Handover-Beschränkungsliste in einem Telekommunikationsnetz, das die folgenden Schritte beinhaltet:
- Empfangen einer Area-Beziehungsinformationsnachricht von wenigstens einem eNodeB, die die MME über benachbarte TA-(Tracking Area)-Beziehungen für den wenigstens einen eNodeB informiert;
- Sammeln mehrerer Area-Beziehungsinformationsnachrichten von mehreren eNodeBs (1);
- Speichern von gesammelten Tracking-Area-Beziehungsinformationen;
- Verwenden der gespeicherten Tracking-Area-Beziehungsinformationen zum Identifizieren von Tracking Areas, die sich geografisch neben Tracking Areas in einer Tracking-Area-Kennungsliste für ein UE befinden,
- Untersuchen, ob das UE zu irgendeiner der benachbarten Tracking Areas zugangsbeschränkt ist, und Ausfüllen einer Handover-Beschränkungsliste mit den Identitäten der beschränkten Tracking Areas,
- Bereitstellen der Handover-Beschränkungsliste in einem Informationselement von der MME zu relevanten eNodeBs, wenn relevante Ereignisse des UE (3) erkannt werden.

7. Verfahren nach Anspruch 6, das ferner einen Schritt des Löschens in der MME von Informationen über Tracking-Area-Beziehungen für einen bestimmten eNodeB beinhaltet, wenn der bestimmte eNodeB neu startet oder eine Löschnachricht sendet.

## Revendications

1. Entité de gestion de la mobilité, appelée entité MME, (210) fournissant une liste de restrictions de transfert intercellulaire dans un réseau de télécommunication (2, 215, 403), comprenant :
- un processeur (211) ;
- une mémoire (222) ; et
- une interface de communication (213),
dans lequel le processeur est agencé de manière à
- recevoir, sur l'interface de communication, un message d'informations sur des relations entre zones, en provenance d'au moins un noeud d'accès réseau, « eNodeB » (1, 402) avec une interface radio, fournissant des informations sur des relations entre zones de suivi adjacentes, TA, pour ledit au moins un noeud « eNodeB » (1) ;
- collecter une pluralité de messages d'informations sur des relations entre zones à partir d'une pluralité de noeuds « eNodeB » (1) ;
- stocker les informations sur des relations entre zones de suivi collectées dans la mémoire ;
- utiliser les informations sur des relations entre zones de suivi stockées en vue d'identifier des zones de suivi géographiquement adjacentes à des zones de suivi dans une liste d'identifiants de zones de suivi pour un équipement UE ;
- vérifier si l'équipement UE présente un accès limité à l'une quelconque des zones de suivi adjacentes, et remplir une liste de restrictions de transfert intercellulaire avec les identités des zones de suivi limitées ;
- envoyer la liste de restrictions de transfert intercellulaire dans un élément d'informations à un noeud d'accès réseau pertinent, en qualité de réponse à un événement d'équipement utilisateur.

2. Entité MME selon la revendication 1, dans laquelle la liste de restrictions de transfert intercellulaire est envoyée dans le cadre d'un message de commande de gestion de la mobilité.

3. Entité MME selon la revendication 1, dans laquelle la liste de restrictions de transfert intercellulaire est envoyée dans le cadre d'une signalisation de commande connexe à l'équipement UE, de l'entité de gestion de la mobilité à un noeud « eNodeB ».

4. Entité MME selon la revendication 1, dans laquelle les informations sur des relations entre zones de suivi sont reçues à partir de noeuds d'accès réseau en utilisant un message de protocole d'application S1.

5. Entité MME selon la revendication 1, agencée en outre de manière à transmettre la liste de restrictions de transfert intercellulaire à un noeud d'accès réseau ne fournissant pas d'informations sur des relations entre zones.

6. Procédé dans une entité de gestion de la mobilité (MME) (407), destiné à fournir une liste de restrictions de transfert intercellulaire dans un réseau de télécommunication, comprenant les étapes ci-dessous consistant à :
- recevoir, à partir d'au moins un noeud « eNodeB », un message d'informations sur des relations entre zones, indiquant à l'entité MME des relations entre zones de suivi adjacentes, TA, pour ledit au moins un noeud « eNodeB » ;
- collecter une pluralité de messages d'informations sur des relations entre zones à partir d'une pluralité de noeuds « eNodeB » (1) ;
- stocker les informations sur des relations entre zones de suivi collectées ;
- utiliser les informations sur des relations entre zones de suivi stockées en vue d'identifier des zones de suivi géographiquement adjacentes à des zones de suivi dans une liste d'identifiants de zones de suivi pour un équipement UE ;
- vérifier si l'équipement UE présente un accès limité à l'une quelconque des zones de suivi adjacentes, et remplir une liste de restrictions de transfert intercellulaire avec les identités des zones de suivi limitées ;
- fournir la liste de restrictions de transfert intercellulaire dans un élément d'informations, de l'entité MME à des noeuds « eNodeB » pertinents, lorsque des événements pertinents de l'équipement UE (3) sont détectés.

7. Procédé selon la revendication 6, comprenant en outre une étape consistant à purger des informations, dans l'entité MME, sur des relations entre zones de suivi, pour un noeud « eNodeB » spécifique, lorsque le noeud « eNodeB » spécifique redémarre ou envoie un message de purge.
